# EUROPÄISCHE PATENTSCHRIFT

(11) **EP 0 484 647 B1**
(45) Veröffentlichungstag und Bekanntmachung des Hinweises auf die Patenterteilung: **18.05.1994**
(21) Anmeldenummer: 91114819.5
(22) Anmeldetag: 03.09.1991
(51) Int. Cl.: B23B 51/00

(54) **Vorrichtung zur Herstellung von Bohrlöchern mit Hinterschneidung**
Device for drilling holes with an undercut
Dispositif de creusage de trous par havage

(30) Priorität: 08.11.1990 DE 4035490; 12.06.1991 DE 4119350
(43) Veröffentlichungstag der Anmeldung: 13.05.1992
(73) Patentinhaber: fischerwerke Artur Fischer GmbH & Co. KG, D-72178 Waldachtal (DE)
(72) Erfinder: Fischer, Artur, Prof. Dr. h. c., W-7244 Waldachtal 3/Tumlingen (DE); Haug, Willi, W-7290 Freudenstadt Musbach (DE); Lind, Stefan, Dipl.-Ing. (FH), W-7244 Waldachtal 3 (DE)

(56) Entgegenhaltungen:
- FR-A- 1 522 160

## Beschreibung

Die Erfindung betrifft eine Vorrichtung zur Herstellung von Bohrlöchern mit Hinterschneidung, insbesondere in Fassadenplatten, gemäß der Gattung des Anspruches 1, vgl. FR-A-1 552 160.

Zur Herstellung von Bohrlöchern mit Hinterschneidung sind Vorrichtungen bekannt, die eine mit einer kalottenförmigen Mulde versehene Lagerbuchse aufweisen, in der ein mit einem Bund versehenes Bohrwerkzeug abgestützt und verschwenkbar gelagert ist. Durch Ausschwenken des Bohrwerkzeuges bei gleichzeitiger Rührbewegung wird von den am Bohrwerkzeug angeordneten Seitenschneiden im Bereich des Bohrlochgrundes eine Hinterschneidung ausgerieben, in die ein Spreizdübel mit aufspreizbarer Spreizhülse formschlüssig einsetzbar ist.

Derartige Bohrlöcher mit Hinterschneidung lassen sich auch in Fassadenplatten oder dgl. einbringen, jedoch müssen dort die Hinterschneidungen sehr exakt ausgeführt werden, damit beim Einsetzen und Aufspreizen eines Spreizankers kein zu hoher Spreizdruck entsteht. Ein zu hoher Spreizdruck kann nämlich dazu führen, daß ein Teil der Fassadenplatte wegplatzt. Um eine exakte Hinterschneidung herzustellen, werden Bohrwerkzeuge verwendet, die einen mit Diamantsplitter bestückten Bohrkopf aufweisen. Für diese schlag- und stoßempfindlichen Bohrwerkzeuge sowie für die erforderliche Genauigkeit der Bohrlöcher mit Hinterschneidung in dünnwandigen Fassadenplatten reichen die bekannten Vorrichtungen zur Herstellung von Bohrlöchern mit Hinterschneidung nicht aus.

Der Erfindung liegt daher die Aufgabe zugrunde, eine Vorrichtung zur Herstellung von Bohrlöchern mit Hinterschneidung, insbesondere für Fassadenplatten, zu schaffen, die die Verwendung eines mit Diamantsplitter bestückten Bohrwerkzeuges sowie die Herstellung eines genauen, auf den Spreizdübel abgestimmten Bohrloches durch zwangsgeführtes Ausschwenken ermöglicht.

Die Lösung dieser Aufgabe wird durch die im Anspruch 1 angegebenen Merkmale erreicht. Mit der Kurbel wird der an der Bohrmaschine befestigte Hebel soweit ausgelenkt, bis der an der Kurbel angebrachte Zapfen auf der kreisförmigen Umfangsfläche der Kurvenscheibe anliegt. Über das in der Vorrichtung eingebaute Schwenklager wird der Bohrer soweit aus der Mittelachse ausgelenkt, daß das auf das Befestigungselement abgestimmte Hinterschneidungsmaß erreicht wird. Durch Drehen der mit ihrem Zapfen an der Umfangsfläche der Kurvenscheibe anliegenden Kurbel wird der Hebel in ausgelenktem Zustand zwangsweise kreisförmig um seine Mittelachse bewegt und damit gleichzeitig mit einer Umdrehung die Hinterschneidung im Bohrloch vollständig ausgerieben. Fehlermöglichkeiten bei der Ausreibung der Hinterschneidung durch zu geringe Auslenkung oder einer unvollständigen Kreisbewegung können durch die Zwangsführung nicht mehr auftreten.

Weitere vorteilhafte Ausgestaltungen der Erfindung ergeben sich aus den Unteransprüchen. Durch eine an der Umfangsfläche der Kurvenscheibe angeordnete Aussparung kann die Kurbel in der Weise einrasten, daß der Hebel nach einer Umdrehung wieder in Nullstellung arretiert wird, in der vor der Auslenkung zunächst das zylindrische Bohrloch hergestellt wird. Zur Stabilisierung der Nullstellung kann auf dem Hebel eine Zentrierhülse mit einer Konusfläche angeordnet sein, die mittels einer Druckfeder in die eine Anfasung aufweisende Bohrung der Kurvenscheibe angedrückt wird.

Um ein Abheben der Kurbel beim Auslenken und Drehen zu verhindern, sind die an der Kurbel angeordneten Zapfen mit einer rechtwinklig abstehenden Lasche versehen, die die Rückseite der Kurvenscheibe hintergreift.

Eine Verklemmung des Hebels in der Bohrung der Kurbel wird dadurch verhindert, daß das von der Bohrung aufgenommene Hebelende ballig ausgebildet ist.

In einer weiteren Ausführungsform kann die Kurbel durch eine auf der Kurvenscheibe aufsitzenden Ringscheibe und einer mit dem Hebel verbundenen und in einer Querbohrung der Ringscheibe geführten Zugstange gebildet sein.

Die Erfindung wird nachfolgend anhand der Zeichnung näher erläutert.

Es zeigen:
- Figur 1: den Gesamtaufbau der Vorrichtung,
- Figur 2: eine Draufsicht auf die Einrichtung zum zwangsgeführten Ausschwenken und
- Figur 3: eine weitere Ausführungsform der Kurbel.

Die Vorrichtung 1 zur Herstellung von Bohrlöchern mit Hinterschneidung in Fassadenplatten 2 ist in einem Ständer 3 integriert, der einerseits in seiner Bodenplatte 4 eine Spanneinrichtung 5 für die Fassadenplatte 2 aufweist, und andererseits über einen Hebel 6 verfügt, mit dem die die Vorrichtung 1 aufnehmende und mit dem Ständer 3 verbundene Halterung 7 auf- und abbewegbar ist. Zum Halten der Vorrichtung 1 in der Halterung 7 weist letztere eine geschlitzte Aufnahmebohrung auf, in der die Lagerbuchse 9 der Vorrichtung 1 durch Zusammenziehen der Aufnahmebohrung eingespannt ist. Von der Lagerbuchse 9 wiederum wird ein an der Hülse 10 angeordneter umlaufender Bund aufgenommen, so daß bei der Auf- und Abbewegung der Halterung 7 die gesamte Bohrvorrichtung mitbewegt wird.

Durch die Hülse 10 verläuft der mit der Bohrmaschine 12 drehmomentübertragend verbundene Adapter 22, der an seiner der Bohrmaschine 12 gegenüberliegenden Stirnseite das zur Herstellung des Bohrloches mit Hinterschneidung erforderliche Bohrwerkzeug 15 aufweist. Die Hülse 10 ist mit dem Gehäuse der Bohrmaschine 12 starr über Schrauben 16 verbunden, so daß bei einer Auslenkung der Bohrmaschine 12 auch die Hülse 10 und damit die Bohrachse 17 ausgelenkt wird. Zur Auslenkung der Bohrmaschine 12 wird eine Kurbelplatte 31 verwendet, die mit einem Handgriff 32 versehen ist. Die Kurbelplatte weist eine zylindrische Aufnahmebohrung 33 auf, in der das ballig ausgebildete Ende 34 des Hebels 35 gelagert ist. Der Hebel 35 ist mit einem Befestigungsflansch 43 und einer Mutter 36 an der Bohrmaschine 12 befestigt.

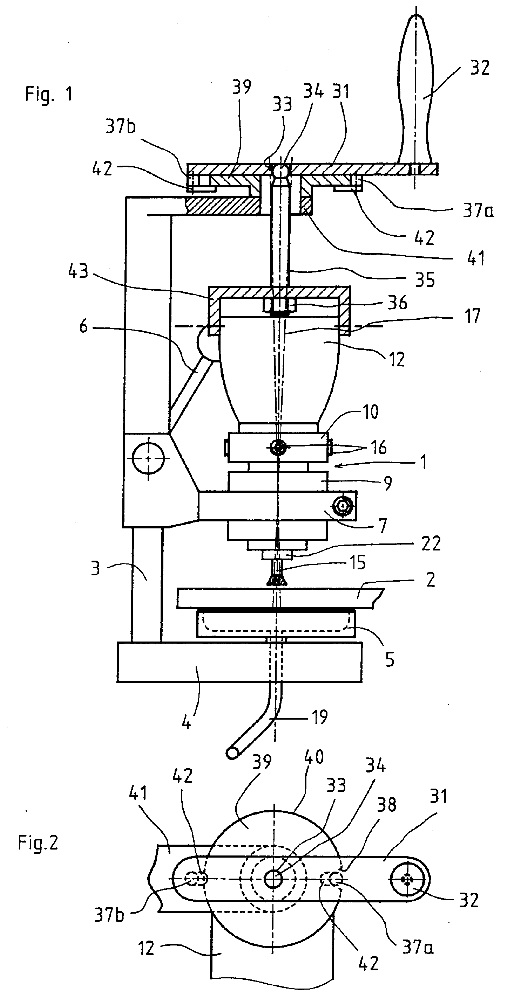

In der in Figur 1 und 2 dargestellten Nullstellung des Hebels 35 befindet sich der an der Rückseite der Kurbelplatte 31 angeordnete Zapfen 37a in einer Aussparung 38 der Kurvenscheibe 39. Mit der Kurbelplatte wird der Zapfen 37a aus der Aussparung 38 herausgezogen und gleichzeitig so verdreht, daß der Zapfen 37a an der Umfangsfläche 40 der Kurvenscheibe 39 anliegt. Damit wird auch der Hebel 35 und die Bohrmaschine 12 ausgelenkt, so daß das Bohrwerkzeug 15 aufgrund des in der Vorrichtung eingebauten Schwenklagers ebenfalls eine Auslenkung in entgegengesetzter Richtung erfährt. Diese Auslenkung erfolgt nach der Herstellung des zylindrischen Bohrloches in der Fassadenplatte. Durch eine Umdrehung mit der Kurbelplatte wird der Hebel 35 in ausgelenktem Zustand kreisförmig um seine Mittelachse bewegt und gleichzeitig mit dem ebenfalls ausgelenkten Bohrwerkzeug 15 die Hinterschneidung in der Fassade ausgerieben.

Nach Beendigung der einen Umdrehung rastet der während der Drehbewegung an der Umfangsfläche 40 der Kurvenscheibe 39 entlang gleitende Zapfen 37a wieder in die Aussparung 38 ein und bringt damit den Hebel 35 in Nullstellung. Die Vorrichtung wird nunmehr über das Hebegestänge 6 nach oben bewegt, so daß das Bohrwerkzeug 15 aus dem Bohrlocheingriff der Fassadenplatte kommt. Die Kurvenscheibe 39 ist über eine Halteplatte 41 mit dem Ständer für die Vorrichtung verbunden. Zur besseren Führung der Kurbelplatte 31 auf der Kurvenscheibe 39 weist diese dem Zapfen 37a gegenüberliegend einen weiteren Zapfen 37b auf, der nach dem Ausrasten der Kurbelplatte 31 ebenfalls zur Anlage an der Umfangsfläche 40 der Kurvenscheibe 39 kommt. Zur Sicherung der Kurbelplatte auf der Kurvenscheibe gegen Abheben sind die Zapfen 37a, 37b mit einer rechtwinklig abstehenden Lasche 42 versehen, die die Rückseite der Kurvenscheibe 39 hintergreift.

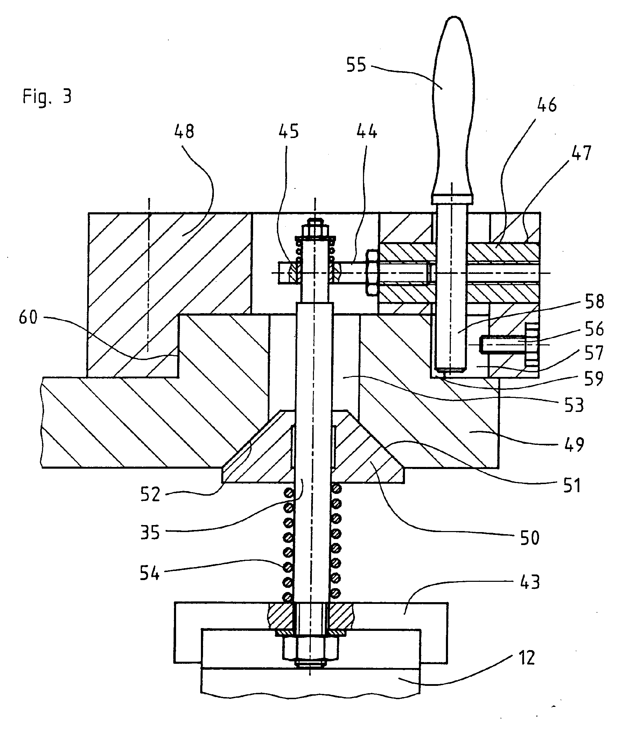

Die in Figur 3 dargestellte Kurbel wird durch eine Zugstange 44 gebildet, die über ein Pendellager 45 mit dem Hebel 35 verbunden ist. Die Zugstange 44 ist in einer Gleithülse 46 eingeschraubt, die in einer Querbohrung 47 der Ringscheibe 48 geführt ist. Die Ringscheibe 48 sitzt auf der Kurvenscheibe 49 auf und ist gegenüber dieser verdrehbar.

Zur Stabilisierung der in Figur 3 dargestellten Nullstellung des über dem Befestigungsflansch 43 mit der Bohrmaschine 12 verbundenen Hebels 35 ist über diesen eine Zentrierhülse 50 gestülpt, die eine Konusfläche 51 aufweist. Diese Konusfläche greift zentrierend in die Anfasung 52 der Bohrung 53 der Kurvenscheibe 49 ein. Der entsprechende Anpreßdruck wird durch eine Druckfeder 54 aufgebracht. In dieser Stellung wird durch Eintauchen des Bohrwerkzeuges in die Fassadenplatte das zylindrische Bohrloch erstellt. Nach Erreichen der gewünschten Bohrlochtiefe wird mit der Zugstange 44 durch Zurückziehen des Handgriffes 55 der Hebel 35 ausgelenkt. Zur Begrenzung der Auslenkung ist in die Ringscheibe 48 eine Schraube 56 eingedreht, die mit ihrer Stirnseite in das Langloch 57 hineinragt.

Beim Auslenken des Hebels wird der Zapfen 58 aus der Aussparung 59 ausgerastet und gleichzeitig so verdreht, daß der Zapfen 58 an der Umfangsfläche 60 der Kurvenscheibe 49 anliegt. Durch eine Umdrehung wird der Hebel 35 in ausgelenktem Zustand kreisförmig um seine Mittelachse bewegt und gleichzeitig mit dem ebenfalls ausgelenkten Bohrwerkzeug die Hinterschneidung in der Fassade ausgerieben. Nach einer Umdrehung rastet der Zapfen 58 wieder in die Aussparung 59 ein, so daß sich die Nullstellung des Hebels 35 wieder einstellen kann. In dieser Stellung wird das Bohrwerkzeug aus dem Bohrloch ausgefahren.

## Patentansprüche

1. Vorrichtung zur Herstellung von Bohrlöchern mit Hinterschneidung, insbesondere in Fassadenplatten (2), bestehend aus einem das Bohrwerkzeug (15) aufnehmenden und mit einer Bohrmaschine (12) drehmomentübertragend verbundenen Adapter (22), und einer in einer Halterung (7) eines Ständers (3) befestigten Lagerbuchse (9), in der eine mit der Bohrmaschine (12) fest verbundene Hülse (10) über ein Schwenklager dreh- und verschwenkbar aufgenommen und gelagert ist, **dadurch gekennzeichnet,** daß an der Bohrmaschine (12) ein Hebel (35) ansetzt, dessen Ende mit einer Kurbel verbunden ist, mit der der Hebel (35) auslenkbar und durch Anlage wenigstens eines an der Kurbel angeordneten Zapfens (37a, 58) an der Umfangsfläche (40, 60) einer mit dem Ständer (3) verbundenen Kurvenscheibe (39, 49) kreisförmig um seine Mittelachse bewegbar ist.

2. Vorrichtung nach Anspruch 1, **dadurch gekennzeichnet,** daß die Kurvenscheibe (39, 49) an ihrer Umfangsfläche (40, 60) eine den Zapfen (37a, 58) aufnehmende und den Hebel (35) in Nullstellung arretierende Aussparung (38, 59) aufweist.

3. Vorrichtung nach Anspruch 1 oder 2, **dadurch gekennzeichnet,** daß die an der Kurbelplatte (31) angeordneten Zapfen (37a, 37b) mit einer rechtwinklig abstehenden Lasche (42) die Rückseite der Kurvenscheibe (39) hintergreifen.

4. Vorrichtung nach einem der vorhergehenden Ansprüche, **dadurch** **gekennzeichnet,** daß die Kurbelplatte (31) zur Aufnahme des Hebelendes eine Bohrung (33) aufweist und das von der Bohrung aufgenommene Hebelende (34) ballig ausgebildet ist.

5. Vorrichtung nach Anspruch 1, **dadurch gekennzeichnet,** daß die Kurbel durch eine auf der Kurvenscheibe (49) aufsitzenden Ringscheibe (48) und einer mit dem Hebel (35) verbundenen und in einer Querbohrung (47) der Ringscheibe (48) geführten Zugstange (44) gebildet ist.

6. Vorrichtung nach Anspruch 1, **dadurch gekennzeichnet,** daß auf dem Hebel (35) eine Zentrierhülse (50) mit einer Konusfläche (51) angeordnet ist, die mittels einer Druckfeder (54) in die eine Anfasung (52) aufweisende Bohrung (53) der Kurvenscheibe (49) angedrückt wird.

## Claims

1. A device for producing drilled holes with an undercut, especially in facing panels (2), consisting of an adapter (22) receiving the drilling tool (15) and joined to a drilling machine (12) so as to transfer torque, and a bearing bush (9) secured in a holding means (7) of a supporting stand (3), in which bearing bush a sleeve (10) fixedly joined to the drilling machine (12) is received and mounted so as to rotate and swivel by way of a swivel bearing, characterized in that on the drilling machine (12) there is mounted a lever (35), the end of which is joined to a crank with which the lever (35) is arranged to be swung out and, by engagement of at least one peg (37a, 58) arranged on the crank on the circumferential face (40, 60) of a cam plate (39, 49) joined to the supporting stand (3), is arranged to be moved in a circle about its centre line.

2. A device according to claim 1, characterized in that the cam plate (39, 49) has on its circumferential face (40, 60) a recess (38, 59) receiving the peg (37a, 58) and locking the lever (35) in the neutral position.

3. A device according to claim 1 or 2, characterized in that the pegs (37a, 37b) arranged on the crank plate (31) engage, with a member (42) projecting at right angles, behind the rear side of the cam plate (39).

4. A device according to one of the preceding claims, characterized in that, for receiving the lever end, the crank plate (31) has a bore (33) and the lever end (34) received by the bore is ball-like.

5. A device according to claim 1, characterized in that the crank is formed by an annular plate (48) positioned on the cam plate (49) and a connecting rod (44) joined to the lever (35) and guided in a transverse bore (47) of the annular plate (48).

6. A device according to claim 1, characterized in that on the lever (35) there is arranged a centring sleeve (50) with a conical face (51), which centring sleeve is pressed by means of a compression spring (54) into the bore (53) with a bevel (52) of the cam plate (49).

## Revendications

1. Dispositif de façonnage de trous contre-dépouillés, notamment dans des panneaux (2) de parement de façades, comprenant un adaptateur (22) recevant l'outil de perçage (15) et relié à une perceuse (12) avec transmission d'un couple de rotation, et un coussinet de portée (9) qui est fixé dans un élément de retenue (7) d'un bâti (3) et dans lequel une douille (10), reliée rigidement à la perceuse (12), est logée et montée avec faculté de rotation et de pivotement par l'intermédiaire d'un palier de pivotement, caractérisé par le fait qu'un levier (35) se rattache à la perceuse (12), l'extrémité dudit levier étant reliée à une manivelle au moyen de laquelle ledit levier (35) peut accomplir une excursion vers l'extérieur et peut être animé d'un mouvement circulaire, autour de son axe médian, par venue en contact d'au moins un tenon (37a, 58), situé sur la manivelle, avec la surface circonférentielle (40, 60) d'un disque (39, 49) à came qui est relié au bâti (3).

2. Dispositif selon la revendication 1, caractérisé par le fait que le disque (39, 49) à came présente, sur sa surface circonférentielle (40, 60), une échancrure (38, 59) qui reçoit le tenon (37a, 58) et arrête le levier (35) dans une position neutre.

3. Dispositif selon la revendication 1 ou 2, caractérisé par le fait que les tenons (37a, 37b), situés sur la plaque (31) formant manivelle, emprisonnent par-derrière la face postérieure du disque (39) à came par une patte (42) saillant à angle droit.

4. Dispositif selon l'une des revendications précédentes, caractérisé par le fait que la plaque (31) formant manivelle est percée d'un logement (33) pour recevoir l'extrémité du levier, et l'extrémité (34) dudit levier, qui est reçue par le logement, est de réalisation sphérique.

5. Dispositif selon la revendication 1, caractérisé par le fait que la manivelle est formée par un disque annulaire (48) reposant sur le disque (49) à came, et par une tige de traction (44) qui est reliée au levier (35), et est guidée dans un alésage transversal (47) du disque annulaire (48).

6. Dispositif selon la revendication 1, caractérisé par le fait qu'une douille de centrage (50), disposée sur le levier (35), présente une surface tronconique (51) pressée, au moyen d'un ressort de pression (54), dans l'alésage (53) muni d'un chanfrein (52) et pratiqué dans le disque (49) à came.
